Europäisches Patentamt

European Patent Office

Office européen des brevets

(19)

(11) Veröffentlichungsnummer: **0 255 617**
B1

(12) **EUROPÄISCHE PATENTSCHRIFT**

(45) Veröffentlichungstag der Patentschrift:
31.01.90

(51) Int. Cl.⁴: **B27B 33/02**, B23D 63/20

(21) Anmeldenummer: **87109841.4**

(22) Anmeldetag: **08.07.87**

(54) **Sägeblatt für Holz- und Kunststoffzerspanung.**

(30) Priorität: **08.08.86  DE 3626873**

(43) Veröffentlichungstag der Anmeldung:
**10.02.88 Patentblatt 88/6**

(45) Bekanntmachung des Hinweises auf die Patenterteilung:
**31.01.90 Patentblatt 90/5**

(84) Benannte Vertragsstaaten:
**DE FR GB IT SE**

(56) Entgegenhaltungen:
CH-A- 272 887
DE-C- 897 006
DE-C- 904 976
DE-C- 925 331

(73) Patentinhaber: **Winkel, Siegfried, Flehenberg 42,
D-5603 Wülfrath(DE)**

(72) Erfinder: **Winkel, Siegfried, Flehenberg 42,
D-5603 Wülfrath(DE)**

(74) Vertreter: **Peerbooms, Rudolf, Dipl.-Phys.,
Postfach 200 208 Dickmannstrasse 45C,
D-5600 Wuppertal 2(DE)**

## Beschreibung

Die Erfindung betrifft ein Sägeblatt mit geschränkten Zähnen für Holz- und Kunststoffzerspanung.

Die bekannten Sägeblätter für die Bearbeitung von Holz und Kunststoffen werden verzahnt und scharf gefeilt oder geschliffen oder auch aus dem vollen Material gefräst oder herausgeschliffen. Anschließend werden die Zähne durch Abknicken der Zähne mittels Druckstähle oder Schlagstähle in regelmäßigem oder unregelmäßigem Abstand geschränkt. Bei dem Arbeitsgang des Schärfens der Zähne durch Schleifscheiben oder Feilen oder bei anderen Arten, z. B. Stanzen der Zähne einschließlich der Schärfung, entsteht am Zahnrand immer eine mehr oder weniger starke Gratbildung, die bisher durch Bürsten oder andere Arbeitsgänge beseitigt werden, damit solche Grate nicht beim Schneiden die Schnittleistung vermindern. Beim Bürsten werden aber die Schneiden zwangsläufig etwas abgestumpft. Die bekannten Sägeblätter weisen eine begrenzte Schnittleistung auf und müssen nach gewissen Standzeiten nachgeschliffen oder ausgewechselt werden. Darüber hinaus ist es bei den bekannten Sägeblättern äußerst schwierig, einen exakten Schrank einzuhalten.

Der Erfindung liegt die Aufgabe zugrunde, ein Sägeblatt erhöhter Schnittleistung und mit absolut gleichmäßigem Schrank zu schaffen.

Zur Lösung dieser Aufgabe ist erfindungsgemäß vorgesehen, daß die Zähne jeweils an ihrer außenliegenden Breitseite mit einem von der Zahnspitze bis mindestens über eine Teilhöhe der Zähne reichenden Hohlschliff versehen sind, wobei die Krümmungsachsen der an beiden Sägeblattseiten vorgenommenen Hohlschliffe in Richtung der Längserstreckung der Verzahnung liegen.

Durch einen solchen Hohlschliff werden eine Reihe von Vorteilen erreicht. Zum einen werden bei den Zähnen, die nach der Schränkung unvermeidbar unterschiedlich zurückfedern, mit exakt fluchtenden Flanken und damit mit einer absolut gleichmäßigen Schränkung versehen, was zu einem ruhigen Schnitt und einer sauberen Schnittfläche führt. Durch den Hohlschliff wird die Zahnspitze dünner und damit aggressiver in der Schnittwirkung. Ferner werden beim Hohlschliff gratfrei geschliffene, messerscharfe Zahnflanken geschaffen, die über die eigentliche Zahnspitze hinausreichen. Die Zähne werden vor dem Hohlschleifen auf beispielsweise 64 bis 66 Grad Rockwell gehärtet, und die dabei entstehenden, abgekohlten Oberflächenbereiche werden beim Hohlschliff abgeschliffen, so daß danach Zahnmaterial größter Härte an den geschliffenen Schneidflanken vorliegt. Im Gesamtergebnis wird durch die Erfindung die Schnittleistung des Sägeblattes um ca. 30 % gegenüber nach herkömmlichen Verfahren gefertigten Sägeblättern erhöht.

In spezieller Ausgestaltung der Erfindung kann vorgesehen werden, daß die Zähne im Bereich ihrer Spitze um etwa 10 bis 30 % dünner als die Sägeblattstärke geschliffen sind. Der Hohlschliff kann über einen Teil der Zahnhöhe oder auch bis zum Zahngrund, bzw. zur Schränklinie, herunter ausgeführt sein.

Die Erfindung kann bei Bandsägeblättern, Handsägeblättern, Maschinensägeblättern und auch bei Kreissägeblättern für alle Arten von Holz- und Kunststoff angewendet werden. Die Erfindung wird im folgenden anhand mehrerer in der Zeichnung dargestellter Ausführungsbeispiele näher beschrieben. In der Zeichnung zeigen:

Fig. 1 ein bandförmiges Sägeblatt nach der Erfindung,
Fig. 2 einen Schnitt gemäß der Linie II-II in Fig. 1,
Fig. 3 eine abgewandelte Ausführungsform eines Sägeblattes nach der Erfindung und
Fig. 4 in Draufsicht ein Kreissägeblatt nach der Erfindung.

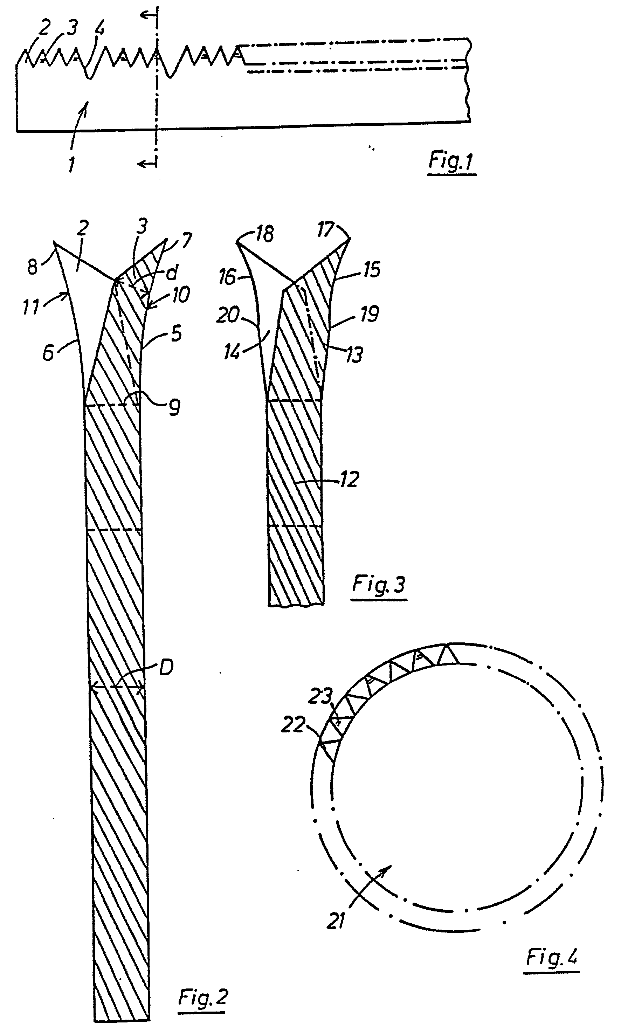

Das in den Fig. 1 und 2 dargestellte bandförmige Sägeblatt 1 ist mit abwechselnd in entgegengesetzten Richtungen geschränkten Zähnen 2, 3 versehen und weist jeweils nach vier aufeinanderfolgenden Zähnen eine tiefer reichende Aus nehmung 4 auf. Wie aus Fig. 2 ersichtlich ist, sind die Zähne 2, 3 jeweils an ihrer außenliegenden Breitseite 5, 6 mit einem von den Zahnspitzen 7, 8 bis etwa zum Zahngrund 9 reichenden Hohlschliff 10, 11 versehen, wobei die Krümmungsachsen der zu beiden Sägeblattseiten vorgenommenen Hohlschliffe 10, 11 jeweils in Richtung der Längserstreckung der Verzahnung liegen. Durch diesen Hohlschliff weisen die Zähne im Bereich ihrer Spitzen 7, 8 eine Stärke d auf, die um etwa 10 bis 30 % geringer als die Sägeblattstärke D ist. Durch den Hohlschliff sind die Zahnflanken entgratet und messerscharf geschliffen und ist zugleich sichergestellt, daß die an jeder Sägeblattseite liegenden Zahnspitzen 7, 8 und ihren nachfolgenden Flanken jeweils exakt in Fluchtung liegen, so daß eine absolut gleichmäßige Schränkung sichergestellt ist.

Bei dem Ausführungsbeispiel nach den Fig. 2 und 3 fallen die Schränkungslinien jeweils mit dem Zahngrund 9 zusammen. Bei Sägeblättern, bei denen die Schränkungslinie ein Stück weit oberhalb der Zahngrundes liegt, kann der Hohlschliff von der Zahnspitze bis zur Schränkungslinie ausgeführt werden.

Bei dem Sägeblatt 12 nach Fig. 3 sind die Zähne 13, 14 mit einem Hohlschliff 15, 16 versehen, der jeweils nur von der Zahnspitze 17, 18 bis etwa in den Bereich 19, 20 halber Zahnhöhe reicht.

Beim Kreissägeblatt 21 nach Fig. 4 sind die Zähne 22, 23 ebenfalls mit einem Hohlschliff versehen, wobei die Hohlschliffflächen der jeweils nach einer Seite hin geschränkten Zähne in einer gemeinsamen Rotationsfläche liegen. Auch beim Kreissägeblatt nach Fig. 4 können sich die Hohlschliffe nur über einen Teil der Zahnhöhe - analog Fig. 3 - oder über die volle Zahnhöhe - analog Fig. 2 - erstrecken.

## Patentansprüche

1. Sägeblatt mit geschränkten Zähnen für Holz- und Kunststoffzerspanung, dadurch gekennzeichnet, daß die Zähne (2, 3) jeweils an ihrer außenliegenden Breitseite (5, 6) mit einem von der Zahnspitze (7, 8) bis mindestens über eine Teilhöhe der Zähne (2, 3) reichenden Hohlschliff (10, 11) versehen sind, wobei die Krümmungsachsen der zu beiden Sägeblattseiten vorgenommenen Hohlschliffe (10, 11) in Richtung der Längserstreckung der Verzahnung liegen.

2. Sägeblatt nach Anspruch 1, dadurch gekennzeichnet, daß die Zähne (2, 3) im Bereich ihrer Spitze (7, 8) um etwa 10 bis 30 % dünner als die Sägeblattstärke (D) geschliffen sind.

3. Sägeblatt nach den Ansprüchen 1 oder 2, dadurch gekennzeichnet, daß der Hohlschliff (10, 11) bis zum Zahngrund (9), bzw. zur Schränklinie, reicht.

## Claims

1. Saw blade with set teeth for cutting wood and plastics, characterised in that each tooth (2, 3) is equipped on its exterior, broader side (5, 6) with hollow grinding (10, 11) extending from the point of the tooth (7, 8) over at least a part of the depth of the teeth, the bend axis of the hollow grinding undertaken on both sides of the saw blade lying in the direction of the longitudinal extent of the toothing.

2. Saw blade according to Claim 1, characterised in that the teeth (2, 3) in the area of their point (7, 8) are ground approximately 10% to 30% thinner than the width (D) of the saw blade.

3. Saw blade according to Claims 1 or 2, characterised in that the hollow grinding (10, 11) extends to the base (9) of the teeth, or to the setting line.

## Revendications

1. Lame de scie à dents avoyées pour le travail du bois et des plastiques, caractérisée par le fait que ses dents (2, 3) ont chacune sur leur grande face extérieure (5, 6) un creux (10, 11) fait à la meule, partant de leur pointe (7, 8) et s'étendant sur au moins une partie de leur hauteur, les axes de courbure des creux (10, 11) faits des deux côtés de la lame de scie étant orientés dans la direction de l'étendue longitudinale de la denture.

2. Lame de scie selon la revendication 1, caractérisée par le fait que ses dents (2, 3) sont, dans la zone de leur pointe (7, 8), meulées à une épaisseur inférieure d'environ 10 à 30% à l'épaisseur (D) de la lame de scie.

3. Lame de scie selon l'une des revendications 1 et 2, caractérisée par le fait que le creux (10, 11) va jusqu'à la base (9) de la dent ou jusqu'à la ligne d'avoyage.

Fig.1

Fig.2

Fig.3

Fig.4